# EUROPEAN PATENT APPLICATION

(11) **EP 4 745 445 A1**
(43) Date of publication of application: **20.05.2026**
(21) Application number: 25215937.1
(22) Date of filing: 14.11.2025
(51) Int. Cl.: F16L 3/10

(54) **INSULATED PIPEWORK ACCESSORY**

(30) Priority: 19.11.2024 GB 202417002
(71) Applicant: Talon Manufacturing Limited, Kent ME8 0PP (GB)
(72) Inventor: HOWARD, Simon, Gillingham, ME8 0PP (GB); HEATHFIELD, Dean, Gillingham, ME8 0PP (GB)
(74) Representative: Yip, Matthew Wing Yu

(57) **Abstract**

A pipe clip operable to be fixed to a surface for supporting a pipe and a device for supporting a pipe inserted through a hole in a wall and sealing the hole around the pipe are disclosed. The pipe clip comprises two movable arms define an aperture when in the closed configuration, a plurality of first protrusions extending from the perimeter of the aperture toward the centre of the aperture wherein the ends of the plurality of the first protrusions collectively circumscribe a substantially circular space for receiving the pipe, and means for allowing the pipe clip to be affixed to the surface, wherein the first arm and the second arm each comprises one or more second protrusions extending away from the perimeter of the aperture perpendicular to the plane of the aperture, wherein the one or more second protrusions form a tubular rim or a substantial part thereof, when the arms are in a closed configuration. The pipe support and aperture sealing device comprises a substantially tubular body having a front face that faces a positive axial direction and is substantially flat, a tubular aperture in the body for receiving a pipe, a substantially tubular rim that extends from the circumference of the front face in the positive axial direction, a first flange extending radially from the body perpendicular to the central axis and at least substantially surrounding the body, and at least one second flange(s) extending radially from the body perpendicular to the central axis and at least substantially surrounding the body, wherein the first flange is larger than each of the at least one second flange(s), and the at least one second flange(s) are disposed behind the first flange in the positive axial direction.

## Description

### Technical field

Aspects of the present disclosure relate to devices for supporting insulated pipework, in particular a pipe clip operable to be fixed to a surface such as a wall to support a pipe, and a device for supporting a pipe that is inserted through a hole in a wall and sealing the hole around the pipe.

### Background

In the plumbing and construction industries, ever greater demands and regulations apply to efficiency and sustainability of heating systems. It is often critical to ensure pipework is properly insulated, so that the operating temperatures of water (or other fluids) in the pipework are maintained; this is especially important for relatively low operating temperatures.

This goal to ensure or improve high-quality insulation applies to all types of pipework, and needs to be taken into consideration from the time of installation. There is a demand for infrastructure, fittings and accessories for supporting pipework in order to achieve this goal.

One of the ways to prevent heat loss from pipework is to wrap insulation around a pipe (such as a foam sleeve). Currently available accessories such as pipe clips (for supporting a pipe that runs along a wall) or through-wall support units (which are fitted into a hole in the wall and into which the pipes are themselves fitted) are only designed with the goal of receiving or supporting the pipe itself and are thus dimensioned accordingly (pipes typically come in standard sizes/diameters), without regard to any additional insulation that may be accompany the pipe; an example of a surrounding member for a pipe is disclosed in GB2543289A. This means that, where such an insulated pipe meets a clip or the hole in the wall, the insulation has to be made to fit around the clip or hole, or has to be left out altogether in the vicinity (e.g. stop before and after a clip). This compromises the integrity of the insulative effect. The fixture may also be awkward, such as requiring an excess amount of adhesive tape wrapping around the insulation and the pipe clip/wall to minimise any gaps. This does not always work well, with unintentional spaces causing exposure detrimental to temperature control.

It is therefore desirable that the connection, and thus insulating effect, could be made more secure, not to mention more convenient in the course of installation, and more aesthetically pleasing.

### Summary of the invention

It is herein disclosed pipe-supporting accessories that are produced with wrap-around insulation in mind; each piece of accessory is already provided with integral features that greatly facilitate seamless and intuitive connection of pipe, insulation and the accessory. This improves the efficiency and costs of pipework installation subject to energy efficiency and sustainability regulations.

In accordance with an aspect of the present invention, there is disclosed a pipe clip suitable for fixing to a surface to support a pipe, the pipe clip comprising: a first arm and a second arm moveable relative to each other between an open configuration and a closed configuration wherein the first and second arms define an aperture therebetween when in the closed configuration, a plurality of first protrusions extending from the perimeter of the aperture toward the centre of the aperture wherein the ends of the plurality of the first protrusions collectively circumscribe or define a substantially circular space for receiving the pipe, and means for allowing the pipe clip to be affixed to the surface. The first arm and the second arm each comprises one or more second protrusions extending away from the perimeter of the aperture perpendicular to the plane of the aperture wherein the one or more second protrusions form a substantially tubular rim or a substantial part thereof when the arms are in a closed configuration.

Preferably, at least one of the first protrusions is formed in the first arm and at least another one of the first protrusions in formed in the second arm.

Preferably, each of the first protrusions is flat and each of the ends of the first protrusions is an arcuate distal edge so that the plurality of arcuate distal edges collectively circumscribe the substantially circular space for receiving the pipe. Preferably, each of the one or more second protrusions is a flange of arcuate shape.

Preferably, the number of first protrusions formed in the second arm is greater than the number of first protrusions formed in the first arm. Alternatively, one first protrusion is formed in each of the first arm and the second arm, wherein said two first protrusions together form a substantially ring-shaped support element in the aperture when the arms are in the closed configuration.

Preferably, the substantially tubular rim or substantial part thereof forms a socket operable to receive, when in use, insulation provided around the pipe. Preferably, the second protrusions of the first arm and the second arm collectively form the substantially tubular rim or substantial part thereof on a front side of the pipe clip. Preferably, the one or more second protrusions comprise at least one additional second protrusion in the first arm and at least one additional second protrusion in the second arm collectively forming an additional substantially tubular rim or substantial part thereof on a back side of the pipe clip.

Preferably, the means for allowing the pipe clip to be affixed to the surface is separated from the aperture by spacing means having a predetermined length, so that, when in use, the pipe clip is affixed to the surface with at least the predetermined length between the surface and the pipe. Preferably, the means for allowing the pipe clip to be affixed to the surface comprises one or more screw holes.

Preferably, the first arm is connected to the second arm by a hinge. Alternatively, the first arm is configured to be completely detachable from the second arm. Preferably, the first arm and/or second arm comprise attachment means for securing them together in the closed position.

Preferably, an adhesive is provided on at least one of the plurality of the first protrusions.

Preferably, the aperture is substantially circular.

Preferably, the diameter of the substantially circular aperture is at least twice the diameter of the substantially circular space for receiving the pipe.

In accordance with another aspect of the present invention, there is disclosed a device for supporting a pipe inserted through a hole in a wall and sealing the hole around the pipe, the device comprising: a body that is substantially tubular about a central axis, the body having a front face that faces a positive axial direction and is substantially flat, a tubular aperture in the body along the central axis for receiving a pipe, a substantially tubular rim that extends from the circumference of the front face in the positive axial direction, a first flange extending radially from the body perpendicular to the central axis and at least substantially surrounding the body, and at least one second flange(s) extending radially from the body perpendicular to the central axis and at least substantially surrounding the body, wherein the first flange is larger than each of the at least one second flange(s), and the at least one second flange(s) are disposed behind the first flange in the positive axial direction.

Preferably, the substantially tubular rim forms a socket operable to receive, when in use, insulation provided around the pipe.

Preferably, the main body has a length along the central axis/in the positive axial direction that is greater than the diameter of the substantially tubular rim.

Preferably, an adhesive is provided on the front face (within the rim i.e. in the socket for receiving insulation).

Preferably, the first flange is substantially flat and substantially ring-shaped. Preferably, at least one second flange(s) are substantially flat and substantially ring-shaped. Preferably, the at least one second flange(s) comprise multiple flanges that are regularly spaced apart. Preferably, the first flange is made of a first material, the at least one flange(s) are made of a second material, and the first material has a greater rigidity than the second material. Preferably, the at least one second flange(s) are made of a resilient or pliable material, so as to facilitate sealing of a hole having a diameter slightly smaller than the diameter of the at least one second flange(s).

Preferably, the diameter of the substantially tubular rim is at least twice the diameter of the tubular aperture for receiving the pipe.

In order that the present invention be more readily understood, various aspects of specific embodiments will now be described in conjunction with the attached drawings.

### Brief description of the drawings

Fig. 1 shows a perspective view of a pipe clip in accordance with an embodiment.
Fig. 2 shows a perspective view of the pipe clip, with a pipe (shown with insulation) fitted therein.
Fig. 3 shows a side view of the pipe clip, with a pipe (shown without insulation for clarity) fitted therein.
Fig. 4a shows a front view of the pipe clip in its open configuration.
Fig. 4b shows a front view of the pipe clip in its closed configuration, with a pipe (shown without insulation for clarity) fitted therein.
Fig. 5 shows a perspective view of an aperture sealing device in accordance with an embodiment, with a pipe (shown without insulation for clarity) fitted therein.
Fig. 6 shows a perspective view of the aperture sealing device, with a pipe (shown with insulation) fitted therein.
Fig. 7a shows a side view of the aperture sealing device.
Fig. 7b shows a side view of the aperture sealing device, with a pipe (shown without insulation for clarity) fitted therein.
Fig. 8 shows a front view of the aperture sealing device.
Fig. 9 shows the aperture sealing device installed in a hole of a section of a wall, with a pipe (shown with insulation) inserted therein.

### Specific embodiments

Various aspects of the invention are described below.

### Pipe clip

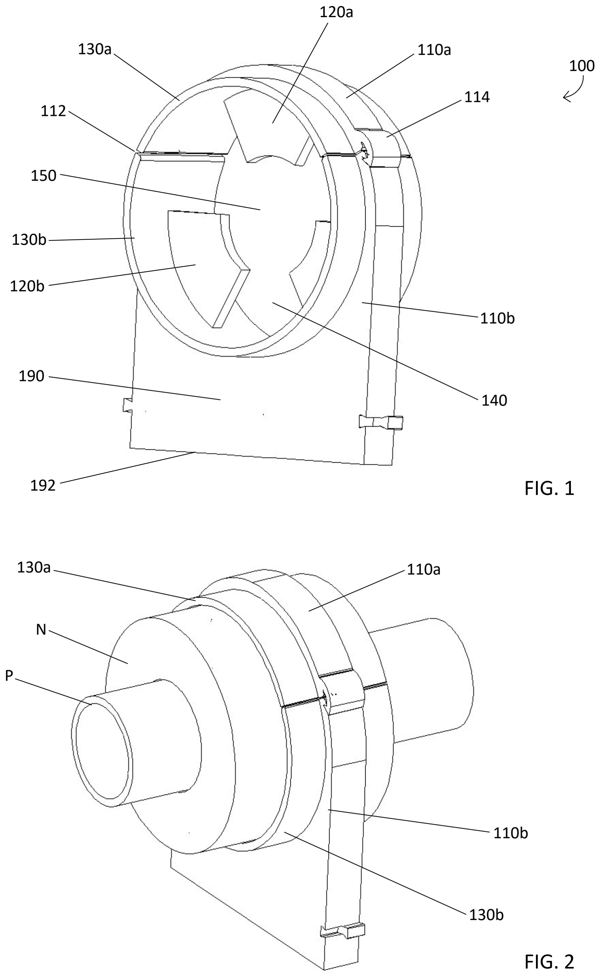

Referring to Figs. 1 to 4b, according to an embodiment of the present disclosure, a clip for supporting a pipe in relation to a wall or surface is herein described. The clip is adapted to receive a pipe or tube and retaining it therein. One clip can be used, or multiple such clips can be affixed to a wall at intervals, to support pipe at one or multiple points, as the pipe runs along the wall. At these points, the pipe does not directly touch the wall but only contacts indirectly via the pipe clip, there being a gap of a certain distance between the pipe and the wall.

The pipe clip is adapted to be manipulated between two configurations or positions: a closed configuration (e.g. when in situ), and an open configuration (e.g. during set-up).

In the arrangement shown in Figs. 1 to 4b, the clip 100 comprises a first portion 110a and a second portion 110b (each portion can also be described as an arm or jaw). It also comprises a hinge 112 that connects the first arm 110a and the second arm 110b, such that the first arm rotates in relation to the second arm about an axis defined by the hinge 112 which is parallel to the direction of the pipe P. Away from the hinge there is preferably provided an attachment/locking means, such as a locking clip 114, that allows a user to lock the two arms to each other (in the closed configuration of the pipe clip 100); preferably, this is a reversible locking means 114 such as a resilient snap clip design, so that the user can subsequently release one arm from the other to open the clip 100 and restore it to the open configuration, and remove the pipe P from the clip when desired. It is also envisaged that, rather than the two arms being connected by a hinge, they can be completely detachable from each other, with suitable locking means provided.

When in the closed configuration, the first arm 110a and second arm 110b collectively define an aperture 140 between them. This aperture 140 has a perimeter defined by the inner sides of the two arms together, and defines a plane of the aperture that is (substantially) perpendicular to the pipe P to be inserted therein. (If the pipe clip and hence the aperture has a significant thickness or length in the pipe direction, the so-called plane of the aperture may be defined as a central plane midway along said dimension in the pipe direction a.k.a. axial direction.) The aperture 140 is preferably substantially circular (so that the perimeter is its circumference, of diameter D1).

There are provided a plurality of first protrusions or pipe support elements 120a,b in the pipe clip 100. They may also be described as wings or fins 120a,b. Preferably, at least one (preferably all) of the protrusions 120a,b are flat elements, and disposed in the plane of the aperture 140 (central plane of the aperture or any parallel plane therein); that is, the thickness of each first protrusion is the axial direction is less than the dimension of the aperture 140 in the axial direction. The first protrusions may all identical to each other, or may be different from each other in shape, for example.

The plurality of first protrusions 120a,b extend from the arms 110a,b inwardly (radially), when the pipe clip 100 is closed, towards a centre or central portion of the aperture 140, each terminating at a respective end or edge. The end does not reach said centre, i.e. each first protrusion has an extent that is less than half of that (e.g. diameter) of the aperture 140. The plurality of first protrusions 120a,b are dimensioned such that their respective ends collectively circumscribe or define a circular or substantially circular space 150. This is a hole 150 (of diameter D2) into which a pipe P can be inserted, and be supported by the first protrusions 120a,b. In other words, these protrusions limit the cross-section area of the aperture 140 to a smaller circular hole 150 for the pipe to go through within the aperture 140, in the plane of said protrusions. Preferably, the (substantially) circular aperture 140 and the smaller (substantially) circular space 150 for receiving the pipe are concentric and/or coaxial.

Preferably, among the plurality of first protrusions 120a,b, at least one of them is formed or attached to the first arm 110a, and at least another one of them is formed or attached to the second arm 110b.

Preferably, at least one (preferably all) of the first protrusions 120a,b end in an arcuate (i.e. arc-shaped) distal/internal edge that represents a section of a circle of diameter D2, to better contact and support a pipe of substantially diameter D2.

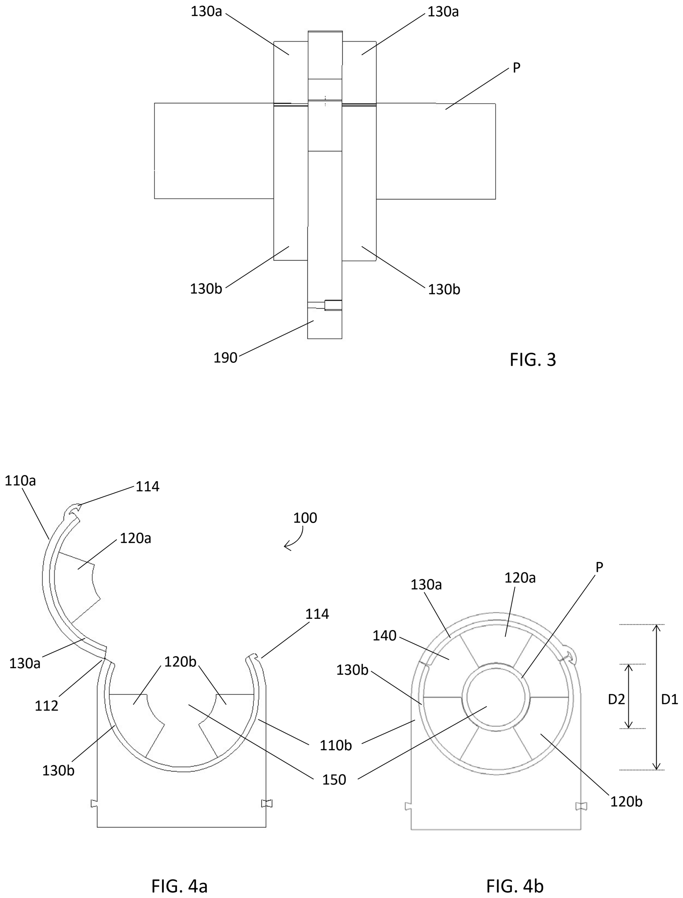

In the arrangement shown in Figs. 1, 4a and 4b, the first arm comprises one wing 120a and the second arm comprises two wings 120b. Other numbers of first protrusions are possible, for example, a total number between two to five, or six, seven or even more; the number of first protrusions in the first arm and in the second arm may be equal or different.

In another arrangement (not illustrated), only one first protrusion 120a is provided in the first arm 110a and only one first protrusion 120b is provided in the second arm 110b. When closed, the pair of protrusions or wings come together to form a complete or substantially complete ring-shaped wall-like element with a circular space 150 in the middle, with no or only negligible gap(s) between the two protrusions, to more securely support the pipe passing through the aperture 140. It can thus be described that, in this arrangement, the pair of first protrusions define a smaller circular hole 150 for the pipe to go through within the aperture 140 by substantially completely blocking the remainder of said aperture, in the plane of said protrusions.

Note that the plurality of first protrusions do not necessarily need to be in the same plane, that is, in an alternative arrangement, they may be formed in the first and second arms on different planes while still located within the aperture, which may have a significant length/thickness in the axial direction of the pipe (i.e. the aperture is of a substantially tubular shape). As long as the first protrusions collectively circumscribe a substantially circular space of diameter D2 in a head-on view down the aperture (the axial direction), a pipe of diameter of substantially D2 can still be supported, although the stability of the arrangement in use may be affected.

The pipe clip 100 is provided with a rim 130a,b, formed of second protrusions from the arms. The rim is preferably a (substantially) tubular rim, formed at the perimeter (circumference) of the aperture 140 defined by the first and second arms 110a,b when the clip 100 is closed, i.e. the tubular rim has a diameter substantially equal to that of the circular aperture, D1. It extends from one face/side (e.g. a front side) of the pipe clip 100 perpendicular to the plane of the aperture 140, i.e. in the axial direction of the pipe P. Part of the rim 130a,b is formed from second protrusions in the first arm 110a and the remainder is formed from second protrusions in the second arm 110b. As these protrusions collectively define a substantially tubular (i.e. circular in cross-sectional shape) rim in the closed clip, each protrusion is preferably a flange, of arcuate (cross-sectional) shape. Preferably there are only two protrusions/flanges 130a,b, one in each of the two arms 110a,b. Note that the rim, though described as a tubular or substantially tubular rim, may instead be a (substantial) portion of a tubular or substantially tubular rim, in the sense that there may be one or more gaps in the rim, rendering it not complete, strictly speaking. It is considered that such a rim, with negligible gaps/openings/imperfections, can still be described as a tubular rim 130a,b. For example, there may be a small gap or rounded angle where the first arm 110a meets the second arm 110b near the hinge 112 or the opposite end where they open from each other; there may also be other gaps in the rim though this is not preferred. Preferably, the component second protrusions forming the tubular rim have a uniform dimension (height/length as measured from its base i.e. in the axial direction).

The rim 130a,b forms a socket or hollow space within itself (if tubular, having a diameter of D1). When the pipe (of diameter D2) is inserted into the circular space 150 circumscribed by the wings 120a,b, the space in the socket between the outer surface of the pipe P and the rim 130a,b is then operable to receive the insulation N provided around the pipe P. Therefore, the insulation material is also "inserted", i.e. allowed to extend into the socket and (substantially) surrounded by the rim 130a,b formed as part of the pipe clip P, and the end parts of the insulation material N is not exposed.

Advantageously, adhesive tape (the main adhesive agent of choice in the industry for this type of job) can be applied more easily, wrapping around the surface of the insulation material N and the protruding and supportive tubular rim 130a,b - both having tubular surfaces that are parallel to each other. In comparison to trying to tape an extreme end of pipe insulation to a clip without a similar, conforming shape, the pipe clip P as presently disclosed makes the procedure much more convenient and efficient to the engineer and the connection more secure, as the two parts are less apt to completely or partially detach, leaving part of the pipe without sufficient insulation, requiring further work or repair and incurring additional costs.

To further strengthen the attachment, preferably, all or at least some of the first protrusions/wings 120a,b in the plane of the aperture 140 are provided with adhesive (on the front side i.e. the same side where the rim is formed), so that when the insulation N around the pipe P comes into contact with the wings as intended, it is assisted to stay in that position, further improving the chances of insulation securely attached at all sections of the pipe up to the middle of the pipe clip where the wings are provided.

Preferably, the same arrangement is provided on the side opposite to the front side, i.e. the back side/face, of the pipe clip 100. In other words, a second tubular rim, formed of respective second protrusions in the first and second arms on the other side to the first tubular rim, to provide a corresponding socket for receiving insulation around the pipe penetrating the clip when in use. Again, preferably, adhesive such as glue can be provided on the surface of the first protrusions 120a,b on this side, to help prevent or minimise any gap between the end of the insulation material N and the clip 100. The provision of such features on both faces of the clip 100 further ensure insulation remains in place along the entirely length of the pipe with the only small exception being at the very plane of the aperture 140, where the wings 120a,b are located.

Optionally, adhesive may also be provided in the inner and/or outer surface of the substantially tubular rim 130a,b.

Optionally, the first protrusions 120a,b and the second protrusions 130a,b may be made of different materials. Optionally, the second protrusions may be made of a material which has a greater stiffness (or lower flexibility) than the material of the first protrusions.

Note that a rim 130a,b on one or both lateral side(s) of the aperture 140 effectively result in a tubular, tunnel-shaped aperture (plus the first protrusions therewithin) of the pipe clip.

One of the first and second arms/portions is provided with means 192 for allowing the pipe clip 100 to be attached to a wall or surface (parallel to and separated from which the supported pipe will extend). As an example, said means comprises one or more holes 192 for fixing screws. For example, said means is provided at a far end/edge/face of the second arm 110b. Preferably, said means or the far edge 192 is distanced by a predetermined distance/length D3 from the aperture 140, by a spacing means 190. This spacing means is attached to the second arm, and preferably is simply an integral formed part of the second arm 110b, having the predetermined distance D3 as its dimension in the plane of the aperture, away from the perimeter of the aperture 140. This is so that, when in use, the aperture 140 and thus the pipe P is spaced from the wall by at least the predetermined distance or size D3 of the spacing element 190. Additionally, a flanged base may be formed at the far end (not shown in attached figures), perpendicular to the plane of the spacing means/clip/aperture, which may comprise the screw holes, for more convenient attachment to the wall.

It is envisaged that a range of pipe sizes and insulation sizes can be accommodated by a family of pipe clips as described above having correspondingly sized pipe support elements/wings (i.e. first protrusions in the aperture) and insulation sockets (i.e. second protrusions forming the rim and related to the size of the aperture), respectively. In particular, the first protrusions 120a,b may be dimensioned to fit, in the small aperture 150, pipes of diameter 22 mm or 28 mm which are currently standard sizes in central heating systems. Additionally or alternatively, the first and second arms 110a,b may be dimensioned to provide a substantially circular aperture 140 of diameter 60 mm approximately to receive a layer of insulation N around the pipe with the corresponding thickness, in accordance with current common practice in the industry. It is thus disclosed that, optionally, the first protrusions have such a radial dimension that the diameter D1 of the aperture 140 is between two times and three times of the diameter D2 of the space 150 for receiving the pipe P; in other words, the ratio of the size, in a linear dimension, of the aperture 140 to the space 150 may be between 2 and 3.

### Aperture-sealing pipe support unit

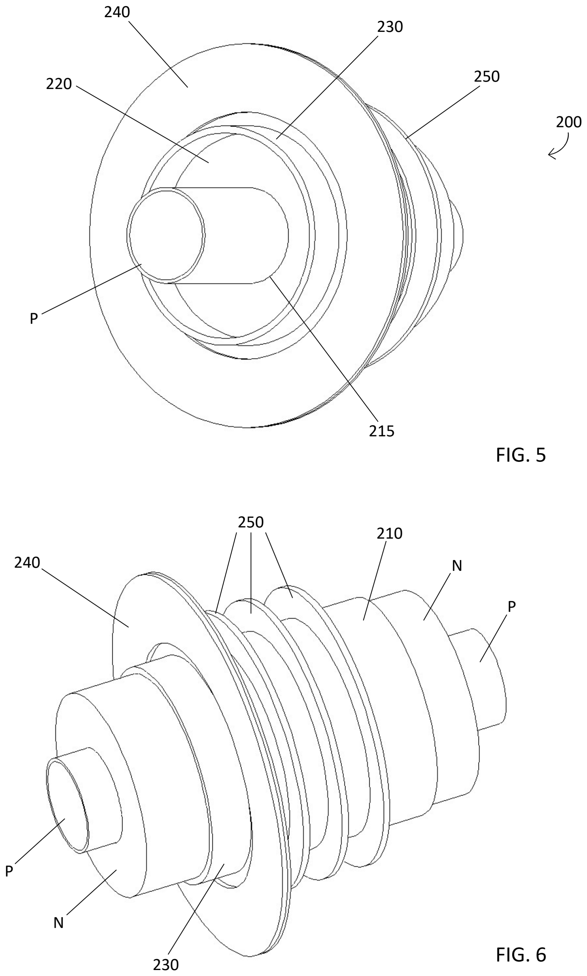

Referring to Figs. 5 to 8, according to another embodiment of the present disclosure, a device for supporting a pipe inserted through a hole in a wall or surface and sealing the hole around the pipe is provided. This can therefore be described as an aperture sealing device or unit. The device is adapted to receive a pipe or tube through it, and to be itself inserted into a hole/aperture in a wall. In other words, the device surrounds the pipe and supports it in its position through the aperture in the wall or any similar structure.

The aperture sealing device 200 comprises a main body 210 that is substantially tubular about a central axis (the axial direction), having a length L along the same direction. A tubular aperture 215, of diameter DD2 is formed through the body 210 along its central axis/the axial direction, configured to receive a circular pipe P of substantially the same diameter DD2. At one end of the main body is a front face 220, which is preferably flat, and ring-shaped because of the aperture 215 opening at its centre.

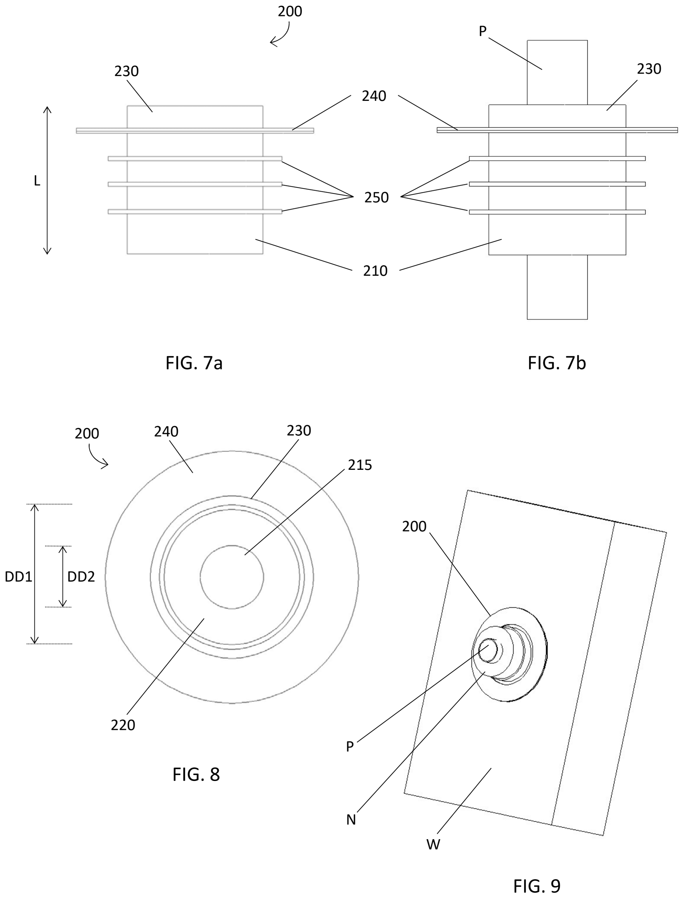

A substantially tubular rim 230 (i.e. circular in cross-section) extends from the circumference of the front face 220 and in a positive axial direction that is defined to be perpendicular to and away from the front face. This rim (or collar) 230 forms a socket or hollow space, of ring-shaped cross-section with outer diameter DD1 and inner diameter DD2. In other words, the front face 220 is located in the socket i.e. inside the rim. When a pipe of diameter DD2 is inserted into the aperture 215, the space in the socket between the outer surface of the pipe P and the rim 230 is then operable to receive the insulation N provided around the pipe. Therefore, the insulation material N is also "inserted", i.e. allowed to extend into the socket and (substantially) surrounded by the rim 230 formed as part of the pipe clip 200, and the end parts of the insulation material N is not exposed. See Fig. 6 and especially Fig. 9, which illustrates the aperture sealing unit 200 already installed in a wall W and supporting a pipe P with insulation N (pipe and insulation truncated for clarity).

Preferably, the length L of the body 210 is equal to or greater than the diameter DD1 of the rim (i.e. the cross-sectional diameter of the tubular body) 230; in other words, the ratio of said length to said rim diameter may be equal to or above 1; alternatively, it may be equal to or above 1.25, 1.5, 2, or 3, for example.

As with the pipe clip 100 described above, advantageously, in this sealing unit 200 adhesive tape can be applied more easily, wrapping around the surface of the insulation material N and the protruding and supportive tubular rim 230 - both having respective tubular surfaces that are parallel to each other. In comparison to trying to tape an extreme end of the insulation to a wall that is perpendicular to the pipe, the aperture sealing and pipe supporting device 200 makes the procedure much more convenient and efficient to the engineer and the connection more secure, as the insulation part is less apt to completely or partially detach from the wall, leaving part of the pipe without sufficient insulation, requiring further work or repair and incurring additional costs.

To further strengthen the attachment, preferably, the front face 220 in the socket for receiving insulation material N comprises an adhesive such as glue. This is so that when the insulation around the pipe such as the extremity of a foam sleeve contacts the front face 220 in use, it is assisted to stay in that position.

Optionally, adhesive may also be provided in the inner and/or outer surface of the substantially tubular rim 230.

The device 200 additionally comprises flanges. There is a first flange 240, or fascia, that extends from the body 210 in a radial direction, perpendicular to the central axis, and surrounds or substantially surrounds the body 210. The first flange is preferably flat and parallel to the plane of the front face 220. It may be located in the same plane as the front face 220, or it may be more advanced (more forward/to the fore) than the front face, or less advanced (more backward/closer to the back) than the front face, in the positive axial direction. This first flange 240 is intended, when the device is in use and installed in the hole in the wall, to be substantially flush against the wall so that it blocks any gaps in the hole between the body of the device 200 and the perimeter of the hole, and enhances the insulating effect. Hence, it acts as a front cover or fascia for the hole. The first flange may be circular in its outer perimeter and thus of an overall ring shape, and is intended to be larger than the hole drilled in the wall (see more below). Preferably, the first flange is made of a substantially rigid material; preferably, the material is a plastic.

There is also provided a second flange, or a plurality of second flanges 250 (also known as fins or ribs). Figs. 5 to 7b show an example of the device with a plurality of, specifically, three, second flanges 250. There can alternatively be between two and five second flanges, or even six, seven or more. Each second flange extends from the body 210 in a radial direction, perpendicular to the central axis, and surrounds or substantially surrounds the body. The second flange(s) 250 are smaller in size (area, or radius as measured from the central axis) than the first flange 240, and are disposed behind (closer to the back/less advanced than) the first flange in the positive axial direction, so that they are inserted first into the hole compared to the first flange which as mentioned remains outside the hole.

Preferably, the area of each second flange is intended to be substantially the same as the hole in the wall that is drilled to receive the device, so that the second flange(s) assist in sealing the hole through part of its length in the wall, enhancing the insulating effect.

Preferably, the second flange(s) 250 are made of a material with a degree of resiliency and/or pliability. This assists in installation of the device into the hole that is substantially of the same size (e.g. diameter) or slightly smaller size as the overall size of the device including the second flanges, as well as enhances the airtightness of the seal and minimise heat loss through the wall. Optionally, the material has a greater level of pliability or flexibility than the material of the first flange 240; for example, it is a soft material like rubber. Preferably, the pliable portion and the relatively rigid portion of the aperture sealing unit 200 are mechanically and/or chemically bonded together to provide a single integral unit.

Preferably, if there are a plurality of second flanges 250, they are identical to each other in size/diameter; optionally, they can be of different sizes; for example, they may decrease in size successively away from the first flange 240. Optionally, they are equally spaced apart from each other. Optionally, they are made of the same material and/or have the same pliability.

It is envisaged that a range of pipe sizes and insulation sizes can be accommodated by a family of wall aperture sealing devices 200 as above disclosed having correspondingly sized tubular apertures 215 and insulation socket (i.e. the substantially tubular rim 230), respectively. In particular, the aperture 215 may be dimensioned to fit pipes of diameter 22 mm or 28 mm which are currently standard sizes in central heating systems. Additionally or alternatively, the rim 230 may be dimensioned to provide a substantially circular socket of diameter 60 mm approximately to receive a layer of insulation N around the pipe with the corresponding thickness, in accordance with current common practice in the industry. It is thus disclosed that, optionally, the rim 230 has a diameter DD1 between two times and three times of the diameter DD2 of the aperture 215; in other words, the ratio of the size, in a linear dimension, of the socket to the aperture may be between 2 and 3.

The present invention is not to be limited by the above-described aspects and embodiments, and that many variations are within the scope of the appended claims. The various aspects and embodiments may be combined if necessary and appropriate. The drawings serve as exemplary illustrations of the invention only, to aid understanding of the invention.

## Claims

1. A pipe clip operable to be fixed to a surface for supporting a pipe, the pipe clip comprising:
a first arm and a second arm moveable relative to each other between an open configuration and a closed configuration, wherein the first and second arms define an aperture therebetween when in the closed configuration;
a plurality of first protrusions extending from the perimeter of the aperture toward the centre of the aperture, wherein the ends of the plurality of the first protrusions collectively circumscribe a substantially circular space for receiving the pipe; and
means for allowing the pipe clip to be affixed to the surface;
wherein the first arm and the second arm each comprises one or more second protrusions extending away from the perimeter of the aperture perpendicular to the plane of the aperture, wherein the one or more second protrusions form a substantially tubular rim or a substantial part thereof, when the arms are in a closed configuration.

2. The pipe clip according to claim 1, wherein at least one of the first protrusions is formed in the first arm and at least another one of the first protrusions in formed in the second arm.

3. The pipe clip according to any one of claims 1 to 2, wherein each of the first protrusions is flat and each of the ends of the first protrusions is an arcuate distal edge, so that the plurality of arcuate distal edges collectively circumscribe the substantially circular space for receiving the pipe.

4. The pipe clip according to any one of claims 1 to 3, wherein the number of first protrusions formed in the second arm is greater than the number of first protrusions formed in the first arm.

5. The pipe clip according to any one of claims 1 to 3, wherein the number of first protrusions formed in the first arm is one and the number of first protrusions formed in the second arm is one, wherein said two first protrusions together form a substantially ring-shaped support element in the aperture when the arms are in the closed configuration.

6. The pipe clip according to any one of claims 1 to 5, wherein each of the one or more second protrusions is a flange of arcuate shape.

7. The pipe clip according to any one of claims 1 to 6, wherein the substantially tubular rim or substantial part thereof forms a socket operable to receive, when in use, insulation provided around the pipe.

8. The pipe clip according to any one of claims 1 to 7, wherein the second protrusions of the first arm and the second arm collectively form the substantially tubular rim or substantial part thereof on a front side of the pipe clip.

9. The pipe clip according to claim 8, wherein the one or more second protrusions comprise at least one additional second protrusion in the first arm and at least one additional second protrusion in the second arm collectively forming an additional substantially tubular rim or substantial part thereof on a back side of the pipe clip.

10. The pipe clip according to any one of claims 1 to 9, wherein the means for allowing the pipe clip to be affixed to the surface is separated from the aperture by spacing means having a predetermined length, so that, when in use, the pipe clip is affixed to the surface with at least the predetermined length between the surface and the pipe.

11. The pipe clip according to any one of claims 1 to 10,
wherein the means for allowing the pipe clip to be affixed to the surface comprises one or more screw holes; and/or
wherein the first arm is connected to the second arm by a hinge; and/or
wherein the first arm and/or second arm comprise attachment means for securing them together in the closed position; and/or
wherein an adhesive is provided on at least one of the plurality of the first protrusions.

12. The pipe clip according to any one of claims 1 to 11, wherein the aperture is substantially circular and, optionally, the diameter of the substantially circular aperture is at least twice the diameter of the substantially circular space for receiving the pipe.

13. A device for supporting a pipe inserted through a hole in a wall and sealing the hole around the pipe, the device comprising:
a body that is substantially tubular about a central axis, the body having a front face that faces a positive axial direction and is substantially flat;
a tubular aperture in the body along the central axis for receiving a pipe;
a substantially tubular rim that extends from the circumference of the front face in the positive axial direction;
a first flange extending radially from the body perpendicular to the central axis and at least substantially surrounding the body; and
at least one second flange(s) extending radially from the body perpendicular to the central axis and at least substantially surrounding the body;
wherein the first flange is larger than each of the at least one second flange(s), and the at least one second flange(s) are disposed behind the first flange in the positive axial direction.

14. The device according to claim 13,
wherein the substantially tubular rim forms a socket operable to receive, when in use, insulation provided around the pipe; and/or
wherein the main body has a length in the positive axial direction that is greater than the diameter of the substantially tubular rim; and/or
wherein an adhesive is provided on the front face.

15. The device according to any one of claims 13 to 14,
wherein the first flange is substantially flat and substantially ring-shaped, and/or at least one second flange(s) are substantially flat and substantially ring-shaped; and/or
wherein the at least one second flange(s) comprise multiple flanges that are regularly spaced apart; and/or
wherein the first flange is made of a first material, the at least one flange(s) are made of a second material, and the first material has a greater rigidity than the second material; and/or
wherein the at least one second flange(s) are made of a resilient or pliable material, so as to facilitate sealing of a hole having a diameter slightly smaller than the diameter of the at least one second flange(s); and/or
wherein the diameter of the substantially tubular rim is at least twice the diameter of the tubular aperture for receiving the pipe.
